# DEMANDE DE BREVET EUROPEEN

(11) **EP 1 096 815 A1**
(43) Date de publication de la demande: **02.05.2001**
(21) Numéro de dépôt: 00402977.3
(22) Date de dépôt: 26.10.2000
(51) Int. Cl.: H04Q 7/24, H04L 29/06, H04Q 7/22

(54) **Procédé de transmission de données par un réseau de téléphonie cellulaire et adaptateur de débit de données pour la mise en oeuvre du procédé**

(30) Priorité: 27.10.1999 FR 9913428
(71) Demandeur: SAGEM S.A., 75116 Paris (FR)
(72) Inventeur: Manac'h, Stéphane, 78510 Triel sur Seine (FR)
(74) Mandataire: Bloch, Gérard

(57) **Abrégé**

Procédé de transmission d'un flux de données à transmettre entre deux équipements radio, émetteur (1) et récepteur (2), reliés chacun à un réseau de radiotéléphonie cellulaire (30) comportant des canaux de transmission numérique, procédé caractérisé par le fait qu'on divise dans un adaptateur de débit, le flux principal de données à transmettre en une pluralité de flux élémentaires et on répartit les flux élémentaires sur autant de canaux de transmission du réseau (30), la division du flux principal et la répartition des flux élémentaires étant effectuées selon le protocole de l'Internet.

## Description

La présente invention concerne la transmission de données par un réseau de téléphonie cellulaire.

Si l'on considère par exemple le réseau GSM, il avait été prévu pour la transmission de signaux de parole par des canaux d'un débit de 9 600 b/s, suffisant pour ne pas dégrader la qualité de la parole tout en évitant un gaspillage de la bande radio.

Par ailleurs, les utilisateurs du réseau téléphonique commuté utilisent celui-ci pour échanger des données à des vitesses toujours plus élevées et en particulier à travers l'INTERNET.

Les utilisateurs du réseau GSM souhaitent donc pouvoir faire de même, pour, par exemple, la tranmission d'images de télévision.

La présente invention vise à permettre de telles transmissions à débit élevé par un réseau de téléphonie cellulaire tout en évitant d'accroître exagérément le coût des équipements de transmission.

A cet effet, l'invention concerne tout d'abord un procédé de transmission d'un flux de données à transmettre entre deux équipements radio, émetteur et récepteur, reliés chacun à un réseau de radiotéléphonie cellulaire comportant des canaux de transmission numérique, procédé caractérisé par le fait qu'on divise le flux principal de données à transmettre en une pluralité de flux élémentaires et on répartit les flux élémentaires sur autant de canaux de transmission du réseau, la division du flux principal et la répartition des flux élémentaires étant effectuées selon le protocole de l'Internet.

Grâce à l'invention, les débits des flux élémentaires étant déterminés, ou bornés, on peut transmettre un flux de données principal d'un débit multiple notablement plus important, et d'autant plus important que le nombre de canaux sur lesquels on le répartit est élevé.

Cela étant effectué selon le protocole de l'Internet, on peut mettre en oeuvre le procédé de l'invention à l'aide d'un routeur du commerce, par conséquent à un coût intéressant.

De préférence, pour la répartition, à un instant courant, des données du flux principal à transmettre,
- on mesure les débits instantanés des flux élémentaires,
- on compare les débits instantanés mesurés pour en déduire le canal de plus fort débit instantané, et
- on route le flux principal vers le canal de plus fort débit instantané.

Par mesure du débit instantané, on entend la mesure de la quantité de données transmises pendant une durée déterminée qui précède l'instant courant.

En cas de coupure de la transmission d'un canal, on va donc pouvoir rapidement détecter cette coupure et répartir le trafic sur les canaux restants. Le canal hors service est ainsi isolé du flux à transmettre et on évite toute perte de données.

L'invention concerne aussi un adaptateur de débit de données d'un flux principal pour la mise en oeuvre du procédé de l'invention, comportant un routeur Internet, avec un port principal et une pluralité de ports élémentaires, et des moyens de radiotéléphonie cellulaire d'émission/réception sur une pluralité de canaux reliés aux ports élémentaires du routeur.

L'invention sera mieux comprise à l'aide de la description suivante d'un mode préféré de mise en oeuvre du procédé de l'invention, en référence au dessin annexé sur lequel
- la figure 1 représente schématiquement deux adaptateurs de débit de données, reliés à travers un réseau de radiotéléphonie cellulaire pour la mise en oeuvre du procédé de l'invention, et
- la figure 2 illustre une variante de réalisation de l'un des adaptateurs de débit de la figure 1, agencé pour être équipée, de façon modulaire, de combinés de radiotéléphonie cellulaire.

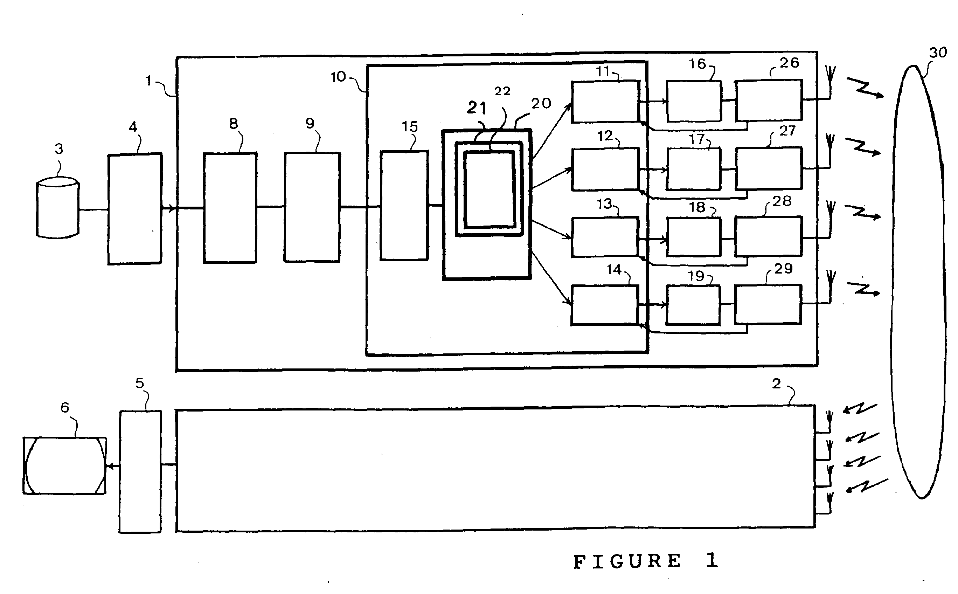

Sur la figure 1 sont représentés deux adaptateurs de débit de données, référencés 1 et 2, qui sont reliés à un réseau de transmission de données 30 par une pluralité de ports élémentaires. Dans cet exemple, le réseau 30 est le réseau GSM de téléphonie cellulaire.

Les adaptateurs 1 et 2 servent à établir une liaison de données à haut débit entre un équipement 3 émettant un flux de données et un équipement 6 de réception de ce flux.

L'équipement 3 est par exemple un serveur de données ou encore un équipement vidéo de prise de vues, alimentant dans ce cas un téléviseur 6 ou un magnétoscope. En particulier dans ce dernier cas, l'adaptateur 1 est mobile et même portable.

Par "haut débit", on entend un débit supérieur à celui offert par une liaison ou canal de transmission numérique de données du réseau radio 30, c'est-à-dire 9 600 b/s dans cet exemple.

L'équipement 3 est relié à l'adaptateur 1 à travers un circuit 4 de mise en forme du flux au format HTTP de l'INTERNET.

L'adaptateur 1 comporte, dans l'ordre de propagation des données, un port d'entrée 8 de traitement du protocole TCP de l'INTERNET, relié au circuit 4, un circuit 9 de mise en paquets Internet, un routeur Internet 10 et une pluralité de circuits radio en parallèle, ici quatre ensembles 16, 26; 17, 27; 18, 28 et 19, 29 de circuits d'émission de données et de liaison avec le réseau GSM 30.

L'adaptateur récepteur 2 présente une structure semblable à celle de l'adaptateur 1, hormis le fait que les circuits radio en parallèle sont récepteurs de données et que les données reçues par radio se propagent jusqu'à un port principal de sortie relié à l'équipement 6 à travers un circuit 5 effectuant l'opération inverse de celle du circuit HTTP 4.

Le routeur 10 comporte un port principal d'entrée 15 recevant un flux principal de données, à haut débit, relié, par des circuits 20 à réseau d'aiguillage ou démultiplexage, à une pluralité de ports élémentaires, ici quatre ports 11, 12, 13, 14 de sortie de flux élémentaires ou secondaires. Les quatre ports de sortie 11 à 14, disposés en parallèle, sont reliés respectivement à la même pluralité de quatre ensembles de circuits 16, 26; 17, 27; 18, 28; 19, 29. Les circuits 16 à 19 traitent le protocole SLIP de transmission de paquets IP sur liaison série, les circuits 26 à 29 étant des circuits d'émission radio sur le réseau GSM 30, comportant chacun un modem d'émission de données et d'émission/réception de signalisations de gestion des communications à travers le réseau GSM 30.

Plus précisément, et en considérant le premier cité des quatre ports de sortie, à titre d'exemple pour l'ensemble des quatre ports en parallèle 11 à 14, le port de sortie 11 du routeur 10 alimente en données le circuit à modem 26 à travers le circuit SLIP 16. Le circuit à modem 26 commande une liaison de signalisation en retour aboutissant au port 11, indiquant le débit radio instantané d'émission du modem du circuit 26 dans un canal de transmission du réseau GSM 30.

Comme évoqué plus haut, l'adaptateur récepteur 2 a une structure homologue de celle de l'adaptateur 1 pour effectuer les opérations inverses de celles exécutées dans ce dernier, c'est-à-dire la réception des-. flux secondaires et leur multiplexage pour constituer un flux principal, de sortie vers l'équipement 6, semblable au flux émis par l'équipement 3.

Le procédé de transmission du flux de données de l'équipement 3 à l'équipement 6 va maintenant être expliqué plus en détails.

Le flux de données issu de l'équipement 3 est tout d'abord mis en forme, au format de l'INTERNET, par les circuits 4, 8 et 9, dont la fonction est classique et n'est donc pas ici explicitée plus avant.

Au niveau du routeur 10, on divise le flux principal de données à transmettre en une pluralité de flux secondaires, et on repartit les flux secondaires sur autant de canaux de transmission du réseau radio 30, la division du flux principal et la répartition des flux élémentaires étant effectuées selon le protocole de l'Internet.

On transmet ainsi, dans cet exemple, un flux principal dont le débit maximal peut atteindre quatre fois celui d'un canal de communication du réseau 30, à 9 600 b/s, au moyen d'un routeur 10 classique pour l'Internet, servant à adapter le débit du flux principal à celui des canaux GSM.

Afin d'utiliser au mieux les quatre canaux GSM (26 à 29), pour la répartition, à un instant courant, des données du flux principal à transmettre,
- on mesure les débits instantanés des flux élémentaires,
- on compare les débits instantanés mesurés pour en déduire le canal de plus fort débit instantané, et
- on route le flux principal, par les circuits d'aiguillage 20, vers le canal de plus fort débit instantané.

Chaque circuit à modem 26 à 29 fournit à cet effet une information de débit instantané au port de sortie 11 à 14 associé et une logique de commande 21 à microprocesseur appartenant aux circuits d'aiguillage 20 recueille ces informations pour gérer la répartition des données du flux principal. L'information de débit peut simplement être une recopie en temps réel, vers le port 11, des données émises par radio par le circuit à modem 26.

Le flux principal est ainsi aiguillé par paquets vers le port de sortie 11 à 14 de débit instantané le plus élevé. Cela évite en particulier d'aiguiller des paquets vers un port de sortie 11 à 14 dont la liaison radio serait hors service.

Le flux principal est temporairement stocké, ici sous forme de paquets IP, dans un registre tampon du port d'entrée 15 et les flux élémentaires sont de même stockés temporairement dans des registres tampon des ports de sortie 11 à 14 avant d'être émis. Dans cet exemple, les données des flux élémentaires, c'est-à-dire ici les paquets, sont comprimées avant émission pour limiter leur volume et donc accroître le débit utile.

Dans cet exemple, la logique de commande 21 des circuits d'aiguillage 20 invalide tout canal GSM hors service, dont le circuit à modem 26 à 29 lui indique donc que le débit radio instantané est nul.

Pour toute la durée restante de la transmission radio du flux principal de données à haut débit, le port 11 à 14 correspondant n'est alors plus éligible pour un routage ou aiguillage du flux principal vers son canal selon le procédé ou algorithme décrit ci-dessus.

Afin cependant de détecter un éventuel retour en service du canal considéré, la logique de commande 21 comporte dans cet exemple un séquenceur 22, ou chien de garde, qui tente périodiquement de transmettre par radio un paquet de données de test qu'il envoie à cet effet à celui ou ceux des ports 11 à 14 associés à un circuit à modem 26 à 29 dont le canal, à débit instantané nul, a été invalidé comme indiqué ci-dessus.

Si le circuit à modem 26 à 29 considéré est à nouveau en service, il indique alors, par la liaison de signalisation en retour, que le débit radio instantané présente une valeur non nulle. La logique de commande 21 déclare alors à nouveau éligible le canal considéré pour le routage vers celui-ci du flux principal, c'est-à-dire valide le canal.

L'émission périodique de paquets de données de test s'effectue même,-dans cet exemple, systématiquement à travers chacun des ports 11 à 14, c'est-à-dire indépendamment des signalisations en retour de débit instantané. Cela permet au chien de garde 22 de fonctionner toujours dans les mêmes conditions, de façon autonome, sans risque de perturbation en cas de dysfonctionnement de certains des circuits d'aiguillage 20.

L'adaptateur récepteur 2, qui peut comporter en outre des circuits semblables à ceux de l'adaptateur 1 pour fonctionner aussi en émission de données, pourrait comporter un nombre de ports en parallèle différent de celui de l'adaptateur 1, dans la mesure où le nombre nécessaire de canaux de réception serait disponible. L'adaptateur 2 pourrait en particulier être prévu pour recevoir, éventuellement simultanément, des flux de divers adaptateurs comme l'adaptateur 1, ayant des flux principaux à divers débits.

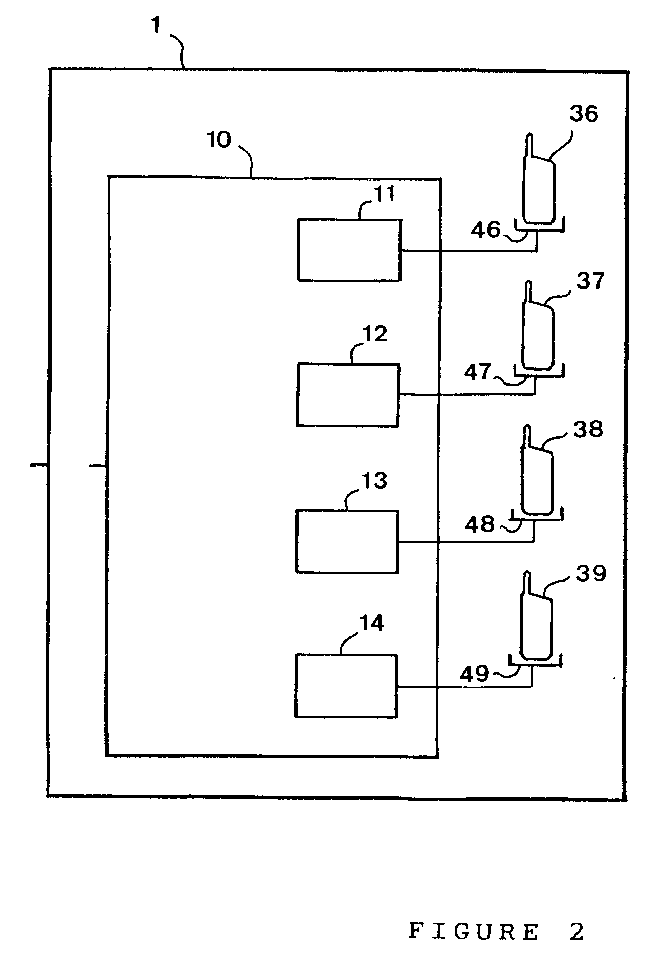

Dans la forme de réalisation modulaire, représentée très schématiquement sur la figure 2, les ports élémentaires 11 à 14 du routeur 10 sont chacun reliés en propre à l'un d'une pluralité de combinés de radiotéléphonie cellulaire 36, 37, 38, 39 en nombre égal à celui des ports élémentaires 11 à 14, constituant des modules d'émission/réception ayant chacun la fonction de l'un des circuits à modem 26 à 29. Les circuits SLIP 16 à 19, non représentés dans un but de clarté, peuvent en variante être intégrés aux combinés 36 à 39 ou bien encore aux ports il à 14. Les combinés 36 à 39 sont chacun reçus dans une embase 46 à 49, spécifique à chacun, de liaison avec les ports 11 à 14 du routeur 10 et leur nombre peut donc varier en fonction des besoins en débit pour le flux principal. L'adaptateur 2 de réception peut présenter une structure modulaire semblable à celle de la figure 2.

Comme évoqué plus haut, les adaptateurs 1 et 2 peuvent être fixes ou mobiles et, dans ce dernier cas, selon encore une autre variante de réalisation non représentée spécifiquement, chacun se présente sous la forme intégrée d'un combiné multicanaux de radiotéléphonie cellulaire.

En d'autres termes, un tel combiné-adaptateur multicanaux regroupe les fonctions des combinés 36 à 39, avec des circuits pour gérer la pluralité de canaux GSM reliés à la même pluralité de ports 11 à 14, et il intègre le routeur 10 ainsi que les divers circuits d'adaptation de format associés 8, 9, 16 à 19. Les circuits source (3, 4) et/ou destinataires (5, 6) des données peuvent de même être intégrés dans le combiné multicanaux.

En particulier, les circuits 11 à 14, 16 à 19 et 26 à 29 de la pluralité de canaux pourraient être intégrés ensemble, c'est-à-dire être remplacés, en tout ou partie, par un ou des circuits communs de gestion des canaux, fonctionnant en partage de temps ou de tâches pour traiter la pluralité de canaux. Cela diminuerait ainsi la consommation et le volume total du combiné multicanaux.

D'une façon générale, et quelle que soit la présentation, modulaire, intégrée ou autre, de l'adaptateur 1, 2, on peut en particulier songer à des échanges bi-directionnels de données entre un tel adaptateur multicanaux de radiotéléphonie et un autre semblable, ou tout autre équipement compatible, à travers un réseau informatique du type de l'Internet auquel l'adaptateur accède par le réseau GSM 30 ou un équivalent, radio ou filaire. Un tel adaptateur, avec des équipements d'extrémité (3, 6) intégrés, peut ainsi être l'équivalent d'un ordinateur, éventuellement portable, relié à un serveur ou autre équipement de traitement de données par une liaison haut débit.

## Revendications

1. Procédé de transmission d'un flux de données à transmettre entre deux équipements radio, émetteur (1) et récepteur (2), reliés chacun à un réseau de radiotéléphonie cellulaire (30) comportant des canaux de transmission numérique, procédé caractérisé par le fait qu'on divise le flux principal de données à transmettre en une pluralité de flux élémentaires et on répartit les flux élémentaires sur autant de canaux de transmission du réseau (30), la division du flux principal et la répartition des flux élémentaires étant effectuées selon le protocole de l'Internet.

2. Procédé selon la revendication 1, dans lequel, pour la répartition, à un instant courant, des données du flux principal à transmettre,
- on mesure les débits instantanés des flux élémentaires,
- on compare les débits instantanés mesurés pour en déduire le canal de plus fort débit instantané, et
- on route le flux principal vers le canal de plus fort débit instantané.

3. Procédé selon la revendication 2, dans lequel on invalide tout canal dont le débit instantané est nul et on tente périodiquement d'y transmettre des données de test pour, en cas de succès, valider le canal.

4. Procédé selon l'une des revendications 2 et 3, dans lequel on stocke temporairement les flux élémentaires avant de les émettre.

5. Procédé selon l'une des revendications 2 à 4, dans lequel on comprime les données des flux élémentaires.

6. Adaptateur de débit de données d'un flux principal pour la mise en oeuvre du procédé de la revendication 1, comportant un routeur Internet (10), avec un port principal (15) et une pluralité de ports élémentaires (11 à 14), et des moyens de radiotéléphonie cellulaire (26 à 29; 36 à 39) d'émission/réception sur une pluralité de canaux reliés aux ports élémentaires (11 à 14) du routeur (10).

7. Adaptateur selon la revendication 6, dans lequel les moyens de radiotéléphonie comportent des combinés de radiotéléphonie cellulaire (36 - 39) en nombre égal à celui des ports élémentaires (11 à 14).

8. Adaptateur selon la revendication 6, se présentant sous la forme intégrée d'un combiné multicanaux de radiotéléphonie cellulaire, les moyens de radiotéléphonie comportant des circuits communs de gestion des canaux.
